# EUROPEAN PATENT APPLICATION

(11) **EP 4 585 500 A1**
(43) Date of publication of application: **16.07.2025**
(21) Application number: 24197043.3
(22) Date of filing: 28.08.2024
(51) Int. Cl.: B63B 1/06, B63B 1/38

(54) **SHIP COMPRISING A GAS SUPPLY APPARATUS THAT SUPPLIES A SHIP BOTTOM HULL OF THE SHIP WITH GAS**

(30) Priority: 11.01.2024 JP 2024002765
(71) Applicant: Academy Publishing, Inc., Tokyo-to (JP)
(72) Inventor: MASUKO, Kunio, Tokyo-to (JP)
(74) Representative: Schmid, Nils T.F.

(57) **Abstract**

A ship includes a ship hull, and a gas supply apparatus that supplies a ship bottom of the ship hull with a gas. The ship bottom is provided with a plurality of recesses supplied with the gas. The recesses are spaced apart from each other in a width direction. Each of the recesses extends in a back and forth direction.

## Description

### CROSS REFERENCE TO RELATED APPLICATIONS

This application claims a priority of JP patent application No. 2024-002765 filed on January 11, 2024, the entire contents of which are incorporated herein by reference.

### Technical Field

The present invention relates to a ship.

### Background Art

Patent Document 1 (JP 2010-120607 A) proposes a friction reduction apparatus that reduces friction between a ship hull of a ship and water. The friction reduction apparatus of Patent Document 1 jets a gas from a group of air jetting holes provided in a ship bottom of the ship. A film of bubbles formed by the jetted gas on the ship bottom reduces friction between the ship hull and water. The reduction in friction can improve fuel consumption and can reduce environmental impact.

In the ship disclosed in Patent Document 1, positions at which the group of air ejection holes are formed are devised in order to jet the gas from a wide area of the ship bottom. On the other hand, the ship bottom is not devised. Thus, the jetted gas immediately rises from the ship bottom to the water surface, whereby friction cannot be effectively reduced.

### Disclosure of the Invention

The present invention has been made in consideration of the above circumstances. The object of the present invention is to provide a ship that can effectively reduce friction between a ship hull and water.

A first ship according to an embodiment comprises:
a ship hull; and
a gas supply apparatus that supplies a ship bottom of the ship hull with a gas;
wherein:
   the ship bottom is provided with a plurality of recesses supplied with the gas;
   the recesses are spaced apart from each other in a width direction; and
   each of the recesses extends in a back and forth direction.

A second ship according to the embodiment comprises:
a ship hull; and
a gas supply apparatus that supplies a ship bottom of the ship hull with a gas;
wherein:
   the ship bottom is provided with a plurality of recesses supplied with the gas;
   the recesses are spaced apart from each other in a width direction;
   each of the recesses extends in a back and forth direction;
   the gas supply apparatus includes a gas supply source that supplies the gas, and a gas supply tube that supplies the gas supplied from the gas supply source toward the recesses;
   the gas supply tube includes an ejection end opened rearward in the back and forth direction;
   the recesses are opened forward in the back and forth direction;
   the gas supply tube extends forward from the ship hull;
   the gas supply tube extending outside the ship hull is inserted into the recess from a front opening of the recess in the back and forth direction; and
   the ejection end is positioned in the recess.

The present invention can effectively reduce friction between the ship hull and water.

### Brief Description Of The Drawings

Fig. 1 is a perspective view of an example of a ship, for explaining an embodiment.
Fig. 2 is a front view of the ship shown in Fig. 1, seen from the front side in a back and forth direction.
Fig. 3 is a side view of the ship shown in Fig .1, seen from outside in a width direction.
Fig. 4 is a bottom view of the ship shown in Fig. 1, seen from below in an up and down direction.
Fig. 5 is a cross-sectional view in a cross-section orthogonal to the back and forth direction, showing in enlargement one of recesses included in a ship hull shown in Fig. 1.
Fig. 6 is a view corresponding to Fig. 3, for explaining a modification example of a gas supply apparatus.
Fig. 7 is a view corresponding to Fig. 4, for explaining a modification example of a recess and a gas supply tube.
Fig. 8 is a view corresponding to Fig. 5, for explaining another modification example of the recess and the gas supply tube.
Fig. 9 is a view corresponding to Fig. 5, for explaining yet another example of the recess.
Fig. 10 is a view corresponding to Fig. 5, for explaining yet another example of the recess.

### Mode for Carrying out the Invention

An embodiment of the disclosure is related to the following <1> to <13>.
<1> A ship comprising:
   a ship hull; and
   a gas supply apparatus that supplies a ship bottom of the ship hull with a gas;
   wherein:
      the ship bottom is provided with a plurality of recesses supplied with the gas;
      the recesses are spaced apart from each other in a width direction; and
      each of the recesses extends in a back and forth direction.
<2> A ship comprising:
   a ship hull; and
   a gas supply apparatus that supplies a ship bottom of the ship hull with a gas;
   wherein:
      the ship bottom is provided with a plurality of recesses supplied with the gas;
      the recesses are spaced apart from each other in a width direction;
      each of the recesses extends in a back and forth direction;
      the gas supply apparatus includes a gas supply source that supplies the gas, and a gas supply tube that supplies the gas supplied from the gas supply source toward the recesses;
      the gas supply tube includes an ejection end opened rearward in the back and forth direction;
      the recesses are opened forward in the back and forth direction;
      the gas supply tube extends forward from the ship hull;
      the gas supply tube extending outside the ship hull is inserted into the recess from a front opening of the recess in the back and forth direction; and
      the ejection end is positioned in the recess.
<3> The ship according to <1> or <2>, wherein
   some of the recesses are provided on one side of the ship bottom in the width direction, and
   the rest of the recesses are provided on the other side of the ship bottom in the width direction.
<4> The ship according to any one of <1> to <3>, wherein
   the gas supply apparatus includes a gas supply source that supplies the gas, and a gas supply tube that supplies the gas supplied from the gas supply source toward the recesses, and
   the gas supply tube extends outside from the ship hull.
<5> The ship according to <4>, wherein
   the gas supply tube includes an ejection end opened rearward in the back and forth direction.
<6> The ship according to any one of <1> to <5>, wherein
   the gas supply apparatus includes a gas supply source that supplies the gas, and a gas supply tube that supplies the gas supplied from the gas supply source toward the recesses, and
   the gas supply tube includes an ejection end opened rearward in the back and forth direction.
<7> The ship according to any one of <1> to <6>, wherein:
   the gas supply apparatus includes a gas supply source that supplies the gas, and a gas supply tube that supplies the gas supplied from the gas supply source toward the recesses;
   the gas supply tube includes a plurality of branch tubes; and
   each of the branch tubes supplies the gas to each of the recesses.
<8> The ship according to any one of <1> to <7>, wherein:
   the recesses are symmetrically arranged with respect to a plane extending in an up and down direction through a center in the width direction.
<9> The ship according to any one of <1> to <8>, wherein:
   the ship hull includes a screw, and
   the screw is not positioned on an extension of each of the recesses.
<10> The ship according to any one of <1> to <9>, wherein:
   one or some of the recesses is/are curved outward in the width direction, in its/their rear portion(s) in the back and forth direction.
<11> The ship according to any one of <1> to <10>, wherein:
   one or some of the recesses is/are curved upward in an up and down direction, in its/their rear portion(s) in the back and forth direction.
<12> The ship according to any one of <1> to <11>, wherein:
   the ship bottom includes a mildly inclined part where an angle defined by the ship bottom with respect to the width direction in a cross-section orthogonal to the back and forth direction is 30° or less, and
   one or some of the recesses is/are provided in the mildly inclined part of the ship bottom.
<13> The ship according to any one of <1> to <12>, wherein:
   one or some of the recesses does/do not include an acute or a right-angled corner in a cross-section orthogonal to the back and forth direction.

An embodiment of the present disclosure is described below with reference to the drawings. In the drawings attached to the specification, a scale dimension, an aspect ratio and so on are changed and exaggerated from the actual ones, for the convenience of easiness in illustration and understanding. A structure shown in some drawings may be omitted in other drawings. The scale dimension, the aspect ratio and so on may vary between the drawings.

In the specification, terms specifying shapes, geometric conditions and their degrees, e.g., "orthogonal", etc., and values of a length and an angle are not limited to their strict definitions, but construed to include a range capable of exerting a similar function, unless otherwise specified.

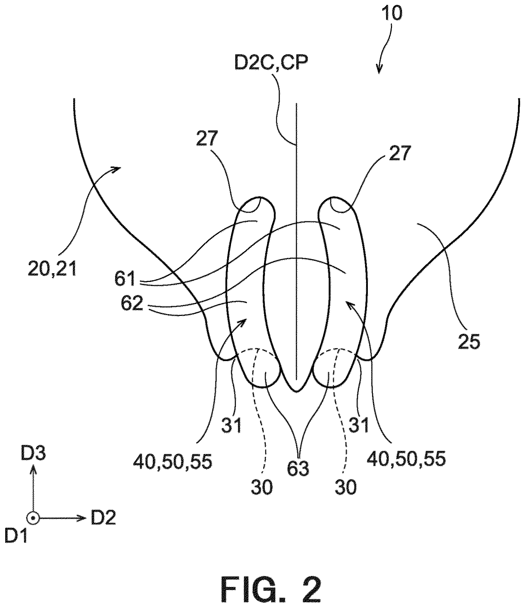

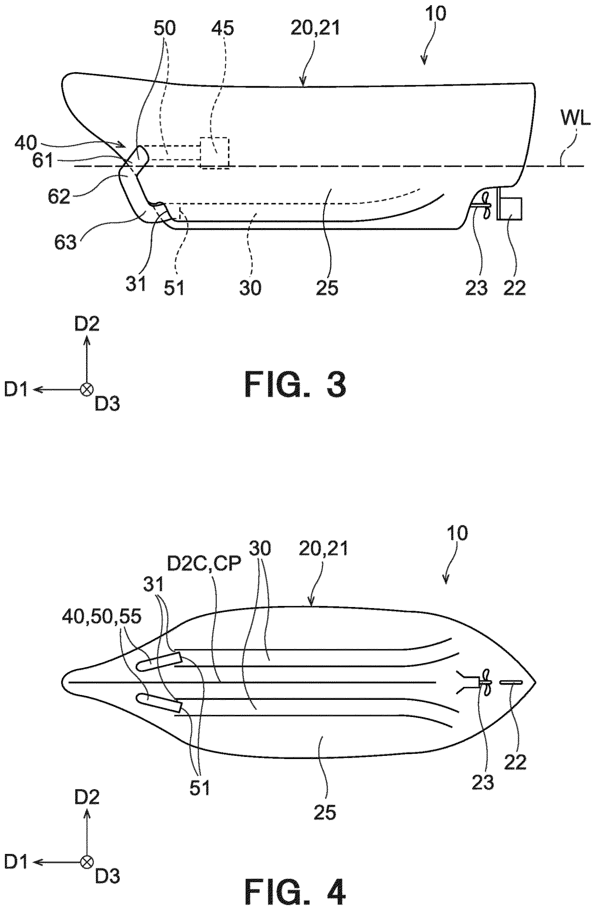

In order to clarify the relationship of directions between the drawings, some drawings show the common back and forth direction D1, the width direction D2, and the up and down direction D3 with arrows having common symbols. A distal end side of each arrow is the first side of each direction. The opposite side of the distal end of the arrow is the second side of each direction. An arrow toward a viewer of the drawings from a sheet plane of the drawing along a direction perpendicular to the sheet plane is shown by a symbol with a dot in a circle, which is shown in Fig. 2, for example. An arrow away from the viewer from the sheet plane along a direction perpendicular to the sheet plane is shown by a symbol with an x in a circle, which is shown in Fig. 4, for example.

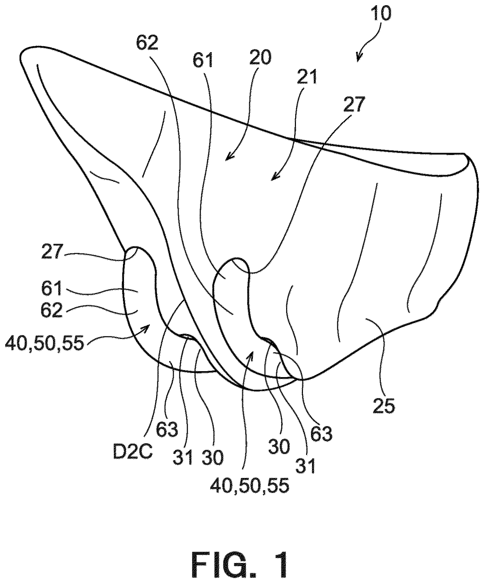

Figs. 1 to 10 are views for explaining an embodiment. Fig. 1 is a perspective view schematically showing a specific example of a ship 10. Fig. 2 is a view showing the ship 10 shown in Fig. 1, seen from the front side in the back and forth direction D1. Fig. 3 is a side view of the ship 10 shown in Fig .1, seen from outside in the width direction D2. Fig. 4 is a bottom view of the ship 10 shown in Fig. 1, seen from below in the up and down direction D3.

In this specification, the terms "front", "back/rear", "up", "down", "back and forth direction", "width direction" and "up and down direction" used for the ship 10 and its constituent elements respectively mean "front", "back/rear", "up", "down", "back and forth direction", "width direction" and "up and down direction" with respect to a floating posture in the water, unless otherwise specified. The "back and forth direction" is a traveling direction in which the ship moves straight. "Front" is "front" when the ship moves straight. The "up and down direction" is a vertical direction of the ship 10 floating in water. The "width direction" is a direction perpendicular to both the "back and forth direction" and the "up and down direction".

As shown in Figs. 1 to 4, the ship 10 includes a ship hull 20 and a gas supply apparatus 40. The ship hull 20 is formed of wood or metal. The ship hull 20 can float in water by generating buoyancy. The water in which the ship 10 floats may be seawater. The water in which the ship 10 floats may also be fresh water. Fig. 3 shows a water surface WL together with the ship 10.

The ship hull 20 may have a structure similar to the known ship. As shown in Figs. 3 and 4, the ship hull 21 may include a body 21, a rudder 22 held by the body 21, and a screw 23 held by the body 21. The ship hull 20 is not particularly limited. The ship hull 20 may be a small vessel, a medium vessel, or a large vessel. The ship hull 20 may be a fishing vessel, a commercial vessel such as a passenger ship or cargo ship, a work vessel, or a ship such as an aircraft carrier or an Aegis ship.

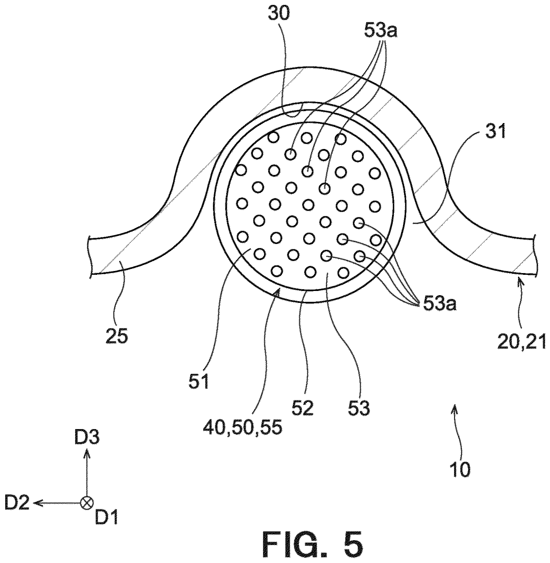

As shown in Figs. 1 to 4, the ship full 20 includes a ship bottom 25. The ship bottom 25 is a part positioned in water, when the ship 10 floats in the water. As shown in Figs. 1 to 5, the ship bottom 25 is provided with a plurality of recesses 30. The recess 30 is a part which is concaved in an outer surface of the ship bottom 25. Namely, the recess 30 is a concaved part provided in the outer surface of the ship bottom 25. Fig. 5 shows in enlargement one of the recesses 30 of the ship hull 20 shown in Fig. 1, seen from behind in the back and forth direction D1.

The gas supply apparatus 40 supplies the ship bottom 25 of the ship hull 20 with a gas. The gas supply apparatus 40 supplies a gas into the recesses 30. The gas supply apparatus 40 may supply the gas to a front area of the recess 30, which is an area positioned on the front side in the back and forth direction D1. The gas may be air. The gas may be one or more of nitrogen, oxygen, and carbon dioxide.

As shown in Fig. 3, the gas supply apparatus 40 may include a gas supply source 45 and a gas supply tube 50. In the illustrated example, the gas supply source 45 supplies the gas. The gas supply tube 50 forms a gas flow path. As shown in Fig. 3, the gas supply source 45 is connected to the gas supply tube 50. The gas supply source 45 supplies the gas supply tube 50 with the gas. The gas supply tube 50 discharges the gas supplied from the gas supply source 45 toward the recesses 30.

The gas supply source 45 may be a known apparatus capable of supplying the gas. The gas supply source 45 may be a blower that blows the gas. The gas supply source 45 may include an electric motor and a fan. The gas supply source 45 may include an electric motor and a compressor. The fan and the compressor are driven by the electric motor to suction the gas and eject the suctioned gas.

As shown in Fig. 2, the gas supply source 45 may be arranged in the body 21 of the ship hull 20, on the front side in the back and forth direction D1. By reducing a distance from the gas supply source 45 to the front area of the recess 30 in the back and forth direction D1, pressure loss in the gas supply tube 50 can be reduced.

The gas supply tube 50 may be made of a metal or resin pipe 52. The gas supply tube 50 guides the gas from the gas supply tube 45 to the recesses 30. The gas supply tube 50 may discharge the gas to a front area of the recess 30, which is positioned on the front side in the back and forth direction D1. According to this example, since a distance along which the gas moves in the recess 30 is long, the gas can remain in the recesses 30 for a long period of time. Namely, the gas in the recesses 30 can be efficiently used.

As shown in Figs. 3 to 5, the gas supply tube 50 includes an ejection end 51. The ejection end 51 is the most downstream part in the gas flow path in the gas supply tube 50. The gas supplied from the gas supply source 45 to the gas supply tube 50 is discharged from the ejection end 51 toward the recesses 30.

As shown in Figs. 3 and 4, the ejection end 51 may be positioned in the recess 30. This allows stable supply of the gas from the gas supply apparatus 40 into the recess 30, and more efficient use of the gas.

As shown in Figs. 3 to 5, the ejection end 51 of the gas supply tube 50 may be opened rearward in the back and forth direction D1. The ejection end 51 may be opened in a direction along the outer surface of the ship bottom 25 in an area where the ejection end 51 is installed. Namely, the ejection end 51 may eject the gas along a direction along the outer surface of the ship bottom 25 in the area where the ejection end 51 is installed. When seen from the width direction D2, the ejection end 51 may be opened in a direction in which the recess 30 extends in an area of the recess 30 to which the gas should be supplied. When seen from the width direction D2, the ejection end 51 may discharge the gas in a direction in which the recess 30 extends in the area of the recess 30 to which the gas should be supplied. These structures can prevent the gas supplied from the gas supply apparatus 40 to the recesses 30 in the ship bottom 25 from immediately rising to the water surface. Namely, the gas in the recesses 30 can be more efficiently used.

As shown in Fig. 3, the gas supply tube 50 may extend from the inside of the ship hull 20 to the outside thereof. In the example shown in Fig. 3, the recess 30 is opened forward in the back and forth direction D1. The ejection end 51 is inserted into the recess 30 from a front opening in the back and forth direction D1.

In the example shown in Figs. 1 to 3, the gas supply tube 50 extends forward in the back and forth direction D1 from the ship hull 20. Namely, the gas supply tube 50 extends forward in the back and forth direction D1 from the inside of the ship hull 20 to the outside thereof. In other words, the gas supply tube 50 extends from the inside of the ship hull 20 to the outside thereof through an opening 27 of the ship hull 20, and has a portion positioned forward of the opening 27 in the back and forth direction D1.

In the example shown in Figs. 1 to 3, the gas supply tube 50 extending outside the ship hull 20 is inserted to the recess 30 from an opening 31 of the recess 30, which is positioned forward in the back and forth direction D1. The gas supply tube 50 includes, as portions exposed outside the ship hull 20, a first portion 61 extending forward in the back and forth direction D1, a second portion 62 turning around the back and forth direction D1, and a third portion 63 extending rearward in the back and forth direction D1. The gas supply tube 50 extends, in the first portion 61 thereof, outside from the ship hull 20. The gas supply tube 50 is inserted, in the third portion 63 thereof, to the recess 30. The first portion 61 passes through the opening 27 of the ship hull 20. The third portion 63 passes through the opening 31 of the recess 30. The opening 31 forms a front end of the recess 30 in the back and forth direction D1. The opening 31 opens the recess 30 forward in the back and forth direction D1.

The gas supply tube 50 extends forward from the ship hull 20, and the gas supply tube 50 extending outside the ship hull 20 is inserted into the recess 30 from the front opening 31 of the recess 30 in the back and forth direction D1. This structure allows the recess 30 to have a long length, and enables efficient use of the gas inside the recess 30 over the entire length. Since the entire length of the recess 30 can be efficiently used, friction between the ship hull 20 and the water can be effectively reduced.

The gas supply tube 50 passes through the opening 31 of the recess 30 from the rear side to the front side in the back and forth direction D1, and the ejection end 51 is positioned in the recess 30. This can promote the gas jetted from the ejection end 51 to travel from the ship bottom inside the recess 30 in the back and forth direction D1, and can prevent the gas from flowing out of the recess 30.

Particularly in the example shown Fig. 3, the gas supply tube 50 extends along the back and forth direction D1 through the opening 31. This can more effectively promote the gas jetted from the ejection end 51 to travel from the ship bottom inside the recess 30 in the back and forth direction D1, and can more effectively prevent the gas from flowing out of the recess 30.

As shown in Figs. 1 to 4, the gas supply apparatus 40 may include a plurality of the gas supply tubes 50. The gas supply tubes 50 may be symmetrically arranged with respect to a center up-down plane CP extending in the up and down direction D3 through a center D2C in the width direction D2. A position at which the gas supply tube 50 is provided on one side in the width direction D2 and a position at which the gas supply tube 50 is provided on the other side in the width direction may have a plane symmetric relationship with respect to the center up-down plane CP. The symmetric arrangement of the gas supply tubes 50 can facilitate straight movement of the ship 10.

As shown in Figs. 1 to 4, the gas supply tube 50 may include a plurality of portions (e.g., pipes 55) exposed from the ship hull 20. These portions (e.g., pipe 55) of the gas supply tube 50, which are exposed from the ship hull 20, may be symmetrically arranged with respect to the center up-down plane CP extending in the up and down direction D3. A position at which the portion of the gas supply tube 50, which is exposed from the ship hull 20, is provided on one side in the width direction D2, and a position at which the portion of the gas supply tube 50, which is exposed from the ship hull 20, is provided on the other side in the width direction D2 may have a plane symmetric relationship with respect to the center up-down plane CP. The symmetric arrangement of the portions of the gas supply tube 50, which are exposed from the ship hull 20, can facilitate straight movement of the ship 10.

The gas supply apparatus 40 may turn the gas into fine bubbles and supply the fine bubbles into the water. The gas supplied as fine bubbles easily forms a bubble film on the ship bottom 25. The bubble film can more effectively reduce friction between the ship bottom 25 and the water.

In the example shown in Fig. 5, the gas supply tube 50 includes a pipe 52 and an adjustment plate 53. A number of holes 53a are formed in the adjustment plate 53. The holes 53a function as openings in the ejection end 51. Since the gas is ejected from the holes 53a, the gas can easily turn into fine bubbles in the recesses 30.

The adjustment plate 53 is provided on an end of the pipe 52, which serves as the ejection end 51. The adjustment plate 53 may be a member separate from the pipe 52, and may be attached to the pipe 52. The adjustment plate 52 may be molded integrally with the pipe 52.

The gas supply tube 50 may include a plurality of branch tubes 55. The branch tube 55 may be formed by the pipe 52. Each of the branch tubes may include the ejection end 51 opened rearward in the back and forth direction D1. Namey, each branch tube 55 may include the ejection end 51 opened rearward in the back and forth direction D1.

Two or more of the branch tubes 55 included in the plurality of the branch tubes 55 may be provided independently in all the sections along the gas flow path. Namely, the two or more branch tube 55 included in the plurality of the branch tubes 55 may not join together in all the sections along the gas flow path.

Two or more of the branch tubes 55 included in the plurality of the branch tubes 55 may join together in one section along the gas flow path. Two or more of the branch tubes 55 included in the plurality of the branch tubes 55 may join together on the upstream side along the gas flow path. In the example shown in Figs. 1 to 4, the gas supply tube 50 includes two branch tubes 55. The two branch tubes 55 may join together and connect to the gas supply source 45.

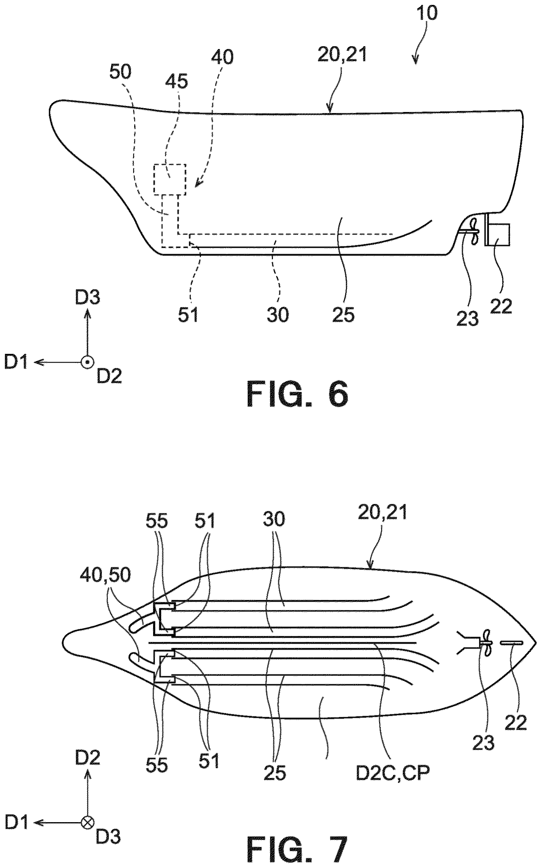

The gas supply apparatus 40 is not limited to the example shown in Figs. 1 to 4. For example, as shown in Fig. 6, the gas supply tube 50 may not extend outside the ship. As shown in Fig. 6, the gas supply tube 50 may be exposed, in a discharge end 51 thereof, to the water. The discharge end 51 of the gas supply tube 50 may be opened rearward in the back and forth direction D1.

In the example shown in Fig. 6, the gas supply tube 50 may include a chamber at the discharge end 51. Namely, the gas supply tube 50 may include, at the discharge end 51, a chamber box forming a chamber. The adjustment plate 53 including a number of holes 53a may be attached to the chamber box. The holes 53a may be directly formed in the chamber box. The provision of the chamber box can make stable ejection of the gas from the gas supply apparatus 40 toward the recesses 30.

The gas supply tube 50 may include a check valve. The check valve may be installed on the pipe 52 of the gas supply tube 50. In the example shown in Figs. 2 and 3, the check valve may be installed on the portion of the pipe 52, which extends outside the ship hull 20. In this example, the gas can be enclosed over a long section of the pipe 52 (from the gas supply source 45 up to the check valve). This gas can contribute to increase in buoyancy of the ship 10. In the example shown in Figs. 2 and 3, the check valve may be installed on a portion of the pipe 52, which is positioned inside the ship hull 20.

The gas supply tube 50 may include a pressure adjustment chamber. The gas supply tube 50 may include a chamber box forming a pressure adjustment chamber. The provision of the chamber box can make stable a pressure of the gas in an area downstream of the chamber box along the gas flow path, to make stable ejection of the gas from the gas supply apparatus 40 toward the recesses 30.

Next, the recesses 30 provided in the ship bottom 25 are further described in detail.

As well shown in Fig. 4, the recesses 30 are spaced apart from each other in the width direction D2. Each of the recesses 30, i.e., each recess 30 extends in the back and forth direction D1. To extend in the back and forth direction D1 means not only that the recess 30 extends in parallel with the back and forth direction D1, but also that the recess 30 has a length in the back and forth direction D1. The recess 30 may form an angle of less than 45° with respect to the back and forth direction D1. An angle between the longitudinal direction of the recess 30 and the back and forth direction D1 may be less than 45°, or may be 30° or less, or may be 20° or less, or may be 10° or less. A lower limit between the angle between the longitudinal direction of the recess 30 and the back and forth direction D1 is not particularly set. The angle between the longitudinal direction of the recess 30 and the back and forth direction D1 may be 0° or more, or may be more than 0°.

As shown in Fig. 3, when seen from the width direction D2, one or some or all of the recesses 30 may be curved. When seen from the width direction, one or some or all of the recesses 30 may be bowed or bent. As shown in Fig. 3, position(s) of one or some or all of the recesses 30 in the up and down direction D3 may be varied along the back and forth direction D1.

Further, one or some or all of the recesses 30 may be curved upward in the up and down direction D3, in its/their rear portion(s) in the back and forth direction D1. Namely, one or some or all of the recesses 30 may be positioned upward in the up and down direction D3 in its/their rear portion(s) in the back and forth direction D1. In this example, the rear portion(s) in the back and forth direction D1 of one or some or all of the recesses 30 may be positioned more upward in the up and down direction D3 than its/their other portions. Alternatively, one or some or all of the recesses 30 may be positioned upward in the up and down direction D3, as it/they move(s) rearward in the back and forth direction D1. One or some or all of the recesses 30 may be curved over the entire length, such that it/they is/are positioned upward in the up and down direction D3 as it/they move(s) rearward in the back and forth direction D1.

As shown in Fig. 4, when seen from below in the up and down direction D3, one or some or all of the recesses 30 may be curved. Seen from below in the up and down direction D3, one or some or all of the recesses 30 may be bowed or bent. As shown in Fig. 4, position(s) of one or some or all of the recesses 30 in the width direction D2 may be varied along the back and forth direction D1.

Furter, one or some or all of the recesses 30 may be curved outward in the width direction D2, in its/their rear portion(s) in the back and forth direction. Namely, one or some or all of the recesses 30 may be positioned outward in the width direction D2, in its/their rear portion(s) in the back and forth direction D1. In this example, the rear portion(s) of one or some or all of the recesses 30 may be positioned more outward in the width direction D2 than its/their other portions. Alternatively, one or some or all of the recesses 30 may be positioned outward in the width direction D2, as it/they move(s) rearward in the back and forth direction D1. Further, one or some or all of the recesses 30 may be curved over the entire length, such that it/they is/are positioned outward in the width direction D2, as it/they move(s) rearward in the back and forth direction D1.

The outside (outward) in the width direction D2 means the side away from the center D2C in the width direction D2. Inside (inward) in the width direction D2 means the side close to the center D2C in the width direction D2.

One or some or all of the recesses 30 may be curved, in its/their rear portion(s) in the back and forth direction D1, upward in the up and down direction D3, and may also be curved outward in the width direction D2.

As shown in Fig. 4, some of the recesses 30 may be provided on one side of the ship bottom 25 in the width direction D2. The rest of the recesses 30 may be provided on the other side of the ship bottom 25 in the width direction D2.

As shown in Fig. 4, the recesses 30 may be symmetrically arranged with respect to the center up-down plane CP extending in the up and down direction D3 through the center D2C in the width direction D2. A position at which the recess 30 is provided on one side of the ship bottom 25 in the width direction D2 and a position at which the recess 30 is provided on the other side in the width direction D2 of the ship bottom 25 may have a plane symmetric relationship with respect to the center up-down plane CP.

As shown in Fig. 4, the recesses 30 may have symmetric configurations with respect to the center up-down plane CP extending in the up and down direction D3 through the center D2C in the width direction D2. The recess 30 provided on one side of the ship bottom 25 in the width direction D2 and the recess 30 provided on the other side in the width direction D2 of the ship bottom 25 may have a plane symmetric relationship with respect to the center up-down plane CP.

As shown in Fig. 4, the screw 23 may not be positioned on an extension of each of the recesses 30. Namely, the screw 23 may not be positioned on the extension of each recess 30. In other words, the screw 23 may be displaced from the extension of each recess 30 in the width direction D2.

In the example shown in Figs. 1 to 4, the ship bottom 25 includes two recesses 30. The number of recesses 30 is not limited to two. For example, the number of recesses 30 may be four, as shown in Fig. 7, or six or eight. The number of recesses 30 may be an odd number, i.e., may be thee or five or seven or nine. When the number of recesses 30 is an odd number, one recess 30 may be provided on the center D2C in the width direction D2.

A cross-sectional shape of the recess 30 is not particularly limited. As shown in Figs. 1 and 5, one or some or all of the recesses 30 may have a curved profile in a cross-section orthogonal to the back and forth direction D1. One or some or all of the recesses 30 may have a profile along a portion of a circle in the cross-section orthogonal to the back and forth direction D1. One or some or all of the recesses 30 may have a semi-circular profile in the cross-section orthogonal to the back and forth direction D1. One or some or all of the recesses 30 may have a profile along a portion of an ellipse in the cross-section orthogonal to the back and forth direction D1. One or some or all of the recesses 30 may have a semi-elliptical profile in the cross-section orthogonal to the back and forth direction D1.

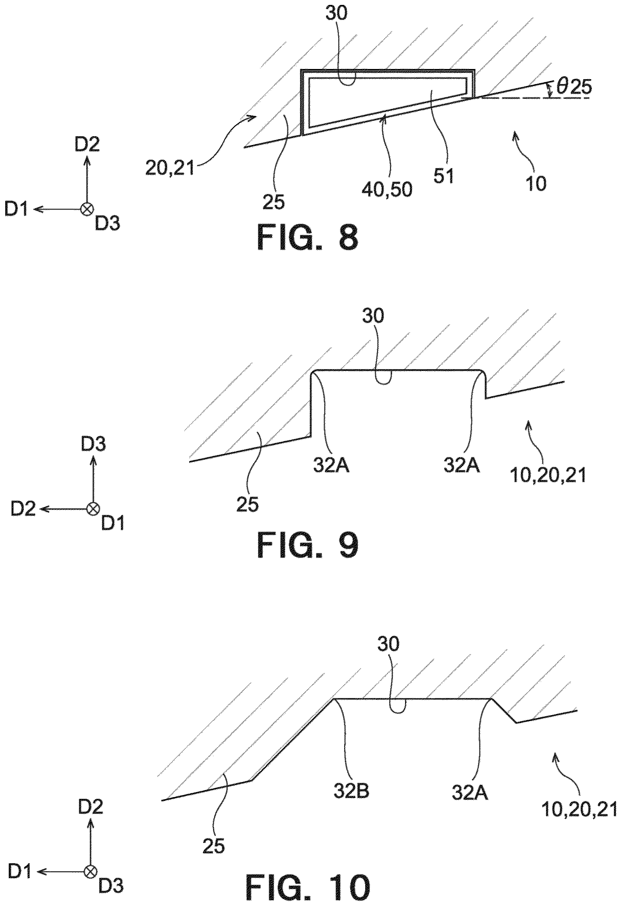

As shown in Fig. 8, one or some or all of the recesses 30 may have a profile including a straight line in the cross-section orthogonal to the back and forth direction D1. As shown in Fig. 8, one or some or all of the recesses 30 may have a profile including a polygonally curved line in the cross-section orthogonal to the back and forth direction D1.

As shown in Figs. 9 and 10, one or some or all of the recesses 30 may not include an acute or a right-angled corner in the cross-section orthogonal to the back and forth direction D1. The recess 30 shown in Fig. 9 includes a chamfered corner 32A. The recess 30 shown in Fig. 9 includes the corner 32A formed by chamfering a right-angled corner. The recess 30 shown in Fig. 10 includes an obtuse corner 32B.

The ship bottom 25 of the ship hull 20 may be flat. As shown in Fig. 2, the ship bottom 25 of the ship hull 20 may be inclined. The slowly inclined ship bottom 25 may be provided with one or some or all of the recesses 30. The ship bottom 25 may include a mildly inclined part 26, and the mildly inclined part 26 may be provided with one or some or all of the recesses 30. The mildly inclined part 26 is a part of the ship bottom 25, which has a ship-bottom inclination angle θ25 of 30° or less. The ship-bottom inclination angle θ25 is an angle (°) between the ship bottom 25 and the width direction D2 in the cross-section orthogonal to the back and forth direction D1.

The recess 30 may end with its depth becoming shallow. A downstream end (rear end) of the recess 30 may be positioned in an area where the ship-bottom inclination angle θ25 is larger, e.g., in an area where the ship-bottom inclination angle θ25 is 45° or more. This example allows the gas, which arrives at the downstream end (rear end) of the recess 30, to rise to the water surface WL without unnecessarily disturbing the water flow.

Next, an operation of the ship 10 as structured above is described.

The ship 10 can move on the water by the function of the ship hull 20 including the rudder 22 and screw 23. During the movement of the ship 10, the gas supply apparatus 40 supplies the ship bottom 25 of the ship hull 20 with the gas. Specifically, the gas supply source 45 supplies air to the gas supply tube 50, and the gas supply tube 50 discharges the gas toward the ship bottom 25.

The gas discharged to the ship bottom 25 is positioned between the ship bottle 25 and the water, to thereby reduce friction between the ship bottom 25 and the water. The reduction in friction between the ship bottom 25 and the water can improve fuel efficiency. The reduction in friction between the ship bottom 25 and the water can increase a speed of the ship 10. Further, the gas in the ship bottom can increase the buoyancy of the ship. Thus, the speed of the ship can be increased also from this point. These can reduce the burden on the environment.

In the prior art (JP 2010-12060607 A), the gas is jetted downward in the up and down direction from the ship bottom. In such a prior art, the gas jetted from the ship bottom is likely to immediately move in the width direction from the ship bottom and rise to the water surface. Thus, unless a large amount of gas is continuously jetted, valid effects by the gas, such as friction reduction and buoyancy increase, cannot be expected.

On the other hand, in the present embodiment, the ship bottom 25 is provided with a plurality of the recesses 30 supplied with the gas. The recesses 30 are spaced apart from each other in the width direction D2. Each of the recesses 30 extends in the back and forth direction D1.

Thus, the gas supplied to the recesses 30 can flow in the recesses 30 in the back and forth direction D1. Namely, the gas supplied from the gas supply apparatus 40 to the ship bottom. 25 can be prevented from immediately moving in the width direction D2 from the ship bottom 25 and rising to the water surface. The gas supplied to the recess 30 can contribute to friction reduction and buoyance increase, for a relatively long period of time during which the gas flows in the recesses 30 in the back and forth direction D1.

The ship bottom 25 is provided with the recesses 30. The recesses 30 are positioned to be spaced apart from each other in the width direction D2. Namely, friction between the ship bottom 25 and the water is reduced and buoyancy is increased at a plurality of locations in the width direction D2. By adjusting the positions of the recesses 30 in the width direction D2, straight movement of the ship 10 can be prevented from being impaired by the friction reduction caused by the gas in the recesses 30. In addition, the posture of the ship 10 can be prevented from being unbalanced by the buoyancy caused by the gas in the recesses 30.

Due to the above, the ship 10 according to the present embodiment can effectively utilize the gas supplied from the gas supply apparatus 40 into the recesses 30 to more efficiently reduce friction between the ship bottom 25 and the water, and to increase buoyancy of the ship 10.

In the aforementioned specific example, some of the recesses 30 are provided on one side of the ship bottom 25 in the width direction D2. The rest of the recesses 30 are provided on the other side of the ship bottom 25 in the width direction D2. According to this embodiment, the recesses 30 are formed in the ship bottom 25 on both sides of the center D2C in the width direction D2. Thus, friction between the ship bottom 25 and the water can be reduced on both sides of the center D2C in the width direction, and buoyancy of the ship 10 can be increased on both sides of the center D2C in the width direction. As a result, straight movement of the ship 10 can be prevented from being impaired by the friction reduction caused by the gas in the recesses 30. In addition, the posture of the ship 10 can be prevented from being unbalanced by the buoyancy caused by the gas in the recesses 30.

In the aforementioned specific example, the recesses 30 are symmetrically arranged with respect to the plane (center up-down plane) CP extending in the up and down direction D3 through the center D2C in the width direction D2. This specific example can more effectively prevent straight movement of the ship 10 from being impaired by the friction reduction caused by the gas in the recesses 30, and can more effectively prevent the posture of the ship 10 from being unbalanced by the buoyancy caused by the gas in the recesses 30.

In the aforementioned specific example, the gas supply apparatus 40 includes the gas supply source 45 that supplies the gas, and the gas supply tube 50 that supplies the gas supplied from the gas supply source 45 toward the recesses 30. The gas supply tube 50 extends outside from the ship hull 20. According to this specific example, the gas can be guided into the recesses 30 by the gas supply tube 50 extending from the inside of the ship to the outside thereof. A direction in which the gas is supplied (ejected) from the gas supply tube 50 toward the recesses 30 can be adjusted with a high degree of freedom. Thus, the gas can be stably supplied from the gas supply apparatus 40 into the recesses 30. The gas supplied to the recesses 30 can be prevented from being immediately leaking from the recesses 30 in the width direction. The flow of gas and water can be made stable in the recesses 30 in the back and forth direction D1 (for example, from the front side to the rear side). These allow the gas supplied from the gas supply apparatus 40 into the recesses 30 to be effectively utilized to thereby achieve more effectively friction reduction and buoyancy increase by the gas.

In the aforementioned specific example, the gas supply apparatus 40 includes the gas supply source 45 that supplies the gas, and the gas supply tube 50 that supplies the gas supplied from the gas supply source 45 toward the recesses 30. The gas supply tube 50 includes the ejection end 51 opened rearward in the back and forth direction D1. This specific example allows the gas to be stably supplied from the gas supply apparatus 40 into the recesses 30. The gas supplied to the recesses 30 can be prevented from being immediately leaking from the recesses 30 in the width direction. The flow of gas and water can be made stable in the recesses 30 in the back and forth direction D1 (for example, from the front side to the rear side). These allow the gas supplied from the gas supply apparatus 40 into the recesses 30 to be effectively utilized to thereby achieve more effectively friction reduction and buoyancy increase by the gas.

In the aforementioned specific example, the gas supply tube 50 includes a plurality of the branch tubes 55. Each of the branch tubes 55 supplies the gas to each of the recesses 30. Namely, the gas can be stably supplied to the respective recesses 30 by means of the branch tubes 55. This allows the gas supplied from the gas supply apparatus 40 into the recesses 30 to be effectively utilized to thereby achieve more effectively friction reduction and buoyancy increase by the gas.

In the aforementioned specific example, the ship hull 20 includes the screw 23. The screw 23 is not positioned on the extension of each of the recesses 30. This specific example can prevent the screw 23 from entraining the gas discharged from the recesses 30, thereby reducing propulsive force caused by the rotation of the screw 23.

In the aforementioned specific example, one or more of the recesses 30 or all of the recesses 30 is/are curved outward in the width direction D2, in its/their rear portion(s) in the back and forth direction. This specific example can prevent the screw 23 from entraining the gas discharged from the recesses 30, thereby reducing propulsive force caused by the rotation of the screw 23.

In the aforementioned specific example, one or more of the recesses 30 or all of the recesses 30 is/are curved upward in the up and down direction D3, in its/their rear portion(s) in the back and forth direction D1. This specific example allows the flow of the gas in the recesses 30 from the front side to the rear side in the back and forth direction D1 to be made more stably by means of buoyancy of the gas in the water. Thus, flow of gas and water in the recesses 30 can be made stable in the back and forth direction D1 (for example, from the front side to the rear side). Namely, the flow of gas and water in the recesses can be prevented from being disturbed so that the gas leaks from an intermediate portion of the recess 30 in the back and forth direction. This allows the gas supplied from the gas supply apparatus 40 into the recesses 30 to be effectively utilized to thereby achieve more effectively friction reduction and buoyancy increase by the gas.

In the aforementioned specific example, the ship bottom 25 includes the mildly inclined part 26 where an angle defined by the ship bottom 25 with respect to the width direction D2 in the cross-section orthogonal to the back and forth direction D1 is 30° or less. One or more of the recesses 30 or all of the recesses 30 is/are provided in the mildly inclined part 26 of the ship bottom 25. This specific example allows the recesses 30 provided in the mildly inclined part 26 to stably accommodate a relatively large amount of gas even through the recesses are shallow. This allows the gas supplied from the gas supply apparatus 40 into the recesses 30 to be effectively utilized to thereby achieve more effectively friction reduction and buoyancy increase by the gas. In addition, since the recesses 30 can be made shallower, rigidity of the ship bottom 25 can be improved.

In the aforementioned specific example, one or more of the recesses 30 or all of the recesses 30 does/do not include an acute or a right-angled corner in the cross-section orthogonal to the back and forth direction D1. This specific example can prevent stagnation from being formed in the recesses 30, to thereby make stable flow of gas and water in the recesses 30 in the back and forth direction D1 (for example, from the front side to the rear side). Namely, the flow of gas and water in the recesses can be prevented from being disturbed so that the gas leaks from an intermediate portion of the recess 30 in the back and forth direction. This allows the gas supplied from the gas supply apparatus 40 into the recesses 30 to be effectively utilized to thereby achieve more effectively friction reduction and buoyancy increase by the gas. In addition, since the recesses 30 can be made shallower, rigidity of the ship bottom 25 can be improved.

In the aforementioned embodiment, the ship 10 includes the ship hull 20, and the gas supply apparatus 40 that supplies the ship bottom 25 of the ship hull 20 with the gas. The ship bottom 25 is provided with the recesses 30 supplied with the gas. The recesses 30 are spaced apart from each other in the width direction D2. Each of the recesses 30 extends in the back and forth direction D1.

According to this embodiment, the recess 30 linearly extends in the back and forth direction D1. The gas flows in the recesses 30 in the back and forth direction D1. Namely, the gas supplied from the gas supply apparatus 40 to the ship bottom 25 can be prevented from immediately moving in the width direction D2 from the ship bottom 25 and rising to the water surface. The gas supplied to the recess 30 can contribute to friction reduction and buoyance increase, for a relatively long period of time during which the gas flows in the recess 30 in the back and forth direction. Namely, the gas supplied from the gas supply apparatus 40 into the recesses 30 can be effectively utilized to thereby achieve more effectively friction reduction and buoyancy increase by the gas.

The embodiment has been described with reference to the specific examples, but the aforementioned specific examples do not limit the embodiment. The above embodiment can be implemented in various other specific examples, and can be variously omitted, replaced, changed, added, without departing from the gist.
- D1:: Back and forth direction
- D2:: Width direction
- D3:: Up and down direction
- D2C:: Center
- CP:: Plane (center up-down plane)
- θ25:: Ship-bottom inclination angle
- 10:: Ship
- 20:: Ship hull
- 21:: Body
- 22:: Rudder
- 23:: Screw
- 25:: Ship bottom
- 26:: Mildly inclined part
- 27:: Opening (ship hull opening)
- 31:: Opening (recess opening)
- 30:: Recess
- 32A:: Corner
- 32B:: Corner
- 40:: Gas supply apparatus
- 45:: Gas supply source
- 50:: Gas supply tube
- 51:: Ejection end
- 52:: Pipe
- 53:: Adjustment plate
- 53a:: Hole
- 55:: Branch tube
- 61:: First portion
- 62:: Second portion
- 63:: Third portion

## Claims

1. A ship comprising:
a ship hull; and
a gas supply apparatus that supplies a ship bottom of the ship hull with a gas;
wherein:
the ship bottom is provided with a plurality of recesses supplied with the gas;
the recesses are spaced apart from each other in a width direction;
each of the recesses extends in a back and forth direction;
the gas supply apparatus includes a gas supply source that supplies the gas, and a gas supply tube that supplies the gas supplied from the gas supply source toward the recesses;
the gas supply tube includes an ejection end opened rearward in the back and forth direction;
the recesses are opened forward in the back and forth direction;
the gas supply tube extends forward from the ship hull;
the gas supply tube extending outside the ship hull is inserted into the recess from a front opening of the recess in the back and forth direction; and
the ejection end is positioned in the recess.

2. The ship according to claim 1, wherein
some of the recesses are provided on one side of the ship bottom in the width direction, and
the rest of the recesses are provided on the other side of the ship bottom in the width direction.

3. The ship according to claim 1 or 2, wherein
the gas supply tube includes a plurality of branch tubes, and
each of the branch tubes supplies the gas to each of the recesses.

4. The ship according to any one of claims 1 to 3, wherein
the recesses are symmetrically arranged with respect to a plane extending in an up and down direction through a center in the width direction.

5. The ship according to any one of claims 1 to 4, wherein
the ship hull includes a screw, and
the screw is not positioned on an extension of each of the recesses.

6. The ship according to any one of claims 1 to 5, wherein
one or some of the recesses is/are curved outward in the width direction, in its/their rear portion(s) in the back and forth direction.

7. The ship according to any one of claim 1 to 6, wherein
one or some of the recesses is/are curved upward in an up and down direction, in its/their rear portion(s) in the back and forth direction.

8. The ship according to any one of claims 1 to 7, wherein
the ship bottom includes a mildly inclined part where an angle defined by the ship bottom with respect to the width direction in a cross-section orthogonal to the back and forth direction is 30° or less, and
one or some of the recesses is/are provided in the mildly inclined part of the ship bottom.

9. The ship according to any one of claims 1 to 8, wherein
one or some of the recesses does/do not include an acute or a right-angled corner in a cross-section orthogonal to the back and forth direction.
